Europäisches Patentamt

European Patent Office

Office européen des brevets

(19)

(11) Veröffentlichungsnummer : **0 305 455 B1**

(12) **EUROPÄISCHE PATENTSCHRIFT**

(45) Veröffentlichungstag der Patentschrift :
26.08.92 Patentblatt 92/35

(51) Int. Cl.⁵ : **B01D 39/20, C04B 38/06, C22B 9/02, B22D 11/10**

(21) Anmeldenummer : 88902377.6

(22) Anmeldetag : 21.03.88

(86) Internationale Anmeldenummer :
PCT/CH88/00062

(87) Internationale Veröffentlichungsnummer :
WO 88/07403 06.10.88 Gazette 88/22

(54) **KERAMISCHER SCHAUMFILTER.**

Die Akte enthält technische Angaben, die nach dem Eingang der Anmeldung eingereicht wurden und die nicht in dieser Patentschrift enthalten sind.

(30) Priorität : 23.03.87 US 29184

(43) Veröffentlichungstag der Anmeldung :
08.03.89 Patentblatt 89/10

(45) Bekanntmachung des Hinweises auf die Patenterteilung :
26.08.92 Patentblatt 92/35

(84) Benannte Vertragsstaaten :
AT BE CH DE FR GB IT LI NL SE

(56) Entgegenhaltungen :
EP-A- 0 076 781
EP-A- 0 087 789

(56) Entgegenhaltungen :
EP-A- 0 097 114
EP-A- 0 159 963
WO-A-87/02069
DE-A- 2 263 539
FR-A- 2 439 170
GB-A- 1 476 481
US-A- 4 713 180

(73) Patentinhaber : ALUSUISSE-LONZA SERVICES AG
Feldeggstrasse 4
CH-8034 Zürich (CH)

(72) Erfinder : BROCKMEYER, Jerry, W.
23225 8th Street
Newhall, CA 91321 (US)
Erfinder : AUBREY, Leonard, S.
58 Chestnut Ridge Road
Arden, NC 28704 (US)
Erfinder : DORE, James, E.
1306 Valmont Drive
Hendersonville, NC 28739 (US)

**Beschreibung**

KERAMISCHER SCHAUMFILTER

Keramischer Schaumfilter zur Filtration von geschmolzenen Metallen, mit einer offenzelligen Schaumstruktur mit einer Vielzahl von untereinander verbundenen Durchgängen, die mit einem Netzwerk aus Keramik umgeben sind, wobei die Keramik aus einem Siliciumcarbid enthaltenden Schlicker gebildet wurde, sowie ein Verfahren zur Herstellung derselben. Im besonderen bezieht sich vorliegende Erfindung auf einen keramischen Schaumfilter mit verbesserten Eigenschaften, speziell zur Filtration von Eisen und Legierungen auf Eisenbasis.

Es ist zum Stand der Technik bekannt, poröse keramische Schaummaterialien zum Filtrieren von geschmolzenem Metall, speziell Aluminium, zu verwenden, wie beispielsweise in den US-Patenten 3,893,917, 3,947,363, 3,962,081, 4,024,056, 4,024,212, 4,075,303, 4,265,659, 4,342,644 und 4,343,704. Die Ausgangsmaterialien für diese Filter umfassen in erster Linie ein phosphatgebundenes, feuerfestes Material mit verschiedenen weiteren Zusätzen, welche bei Temperaturen von rund 1000°C gebrannt werden, um die Bindung zu verfestigen. Während dieser Typ eines Feuerfestmaterials für die Anwendung in der Aluminiumindustrie geeignet ist und leicht den meisten Aluminiumlegierungen widersteht, die normalerweise bei etwa 704°C vergossen werden, ist dieser für viele andere potentielle Anwendungen wegen zu geringer Festigkeit, des begrenzten chemischen Widerstandes und der bescheidenen Hochtemperaturfestigkeit ungeeignet. Es war deshalb erstrebenswert, ein Material zu finden, welches die vorteilhaften Eigenschaften des bisher bekannten Schaummaterials beibehält, besonders die hohe Porosität, den geringen Druckabfall, die hohe geometrische Oberfläche und die gewundenen Fliesswege, das aber die Mängel bezüglich der Festigkeit, der chemischen Beständigkeit und der Temperaturbeständigkeit überwindet. Zusätzlich war es sehr erstrebenswert, ein Material und dessen Herstellungsverfahren zu finden, das für eine Reihe von Anwendungen, insbesondere Hochtemperaturanwendungen, wie die Filtration von Eisenmetall, angewendet werden kann.

Die US-PS 4,610,832 beschreibt einen verbesserten keramischen Schaumfilter und ein Verfharen zur Herstellung desselben, der besonders für Hochtemperaturanwendungen wie die Eisen- oder Stahlfiltration geeignet ist, und auf der Anwendung eines wässrigen Schlickers einer thixotropen keramischen Zusammensetzung, mitumfassend einen gelierten, Aluminiumoxid-hydrat Binder, basiert Es wurde gefunden, dass für bestimmte Anwendungen spezielle Fliess- und Sperrsysteme notwendig sind, um das Angiessen dieser Filter zu gewährleisten, wobei dieser Filter an sich schon eine bedeutsame Verbesserung darstellt.

Die EP-A-0 076 781 und die EP-A-0 097 114 beschreiben Filtermedien in Form eines stabilen porösen Körpers aus gegenseitig durch verschiedenste Binder gegenseitig gebundene Körner von verschiedenen fenerfesten Materialen, die unter anderem Siliciumcarbid oder Aluminiumoxid neben einem Phosphatbinder oder einem Aluminiumhydroxid-Binder enthalten.

Es ist deshalb Hauptgegenstand und Aufgabe vorliegender Erfindung, einen verbesserten keramischen Filter zur Verfügung zu stellen und ein Verfahren, um denselben herzustellen.

Es ist ein weiterer Gegenstand vorliegender Erfindung, einen verbesserten keramischen Schaumfilter zur Verfügung zu stellen und ein Verfahren wie vorbeschrieben, welches billig und leicht auszuführen ist und welches in einem Filter mit dem gewünschten und selbstverständlich verbesserten Eigenschaften resultiert.

Ein weiterer Gegenstand vorliegender Erfindung ist noch, einen verbesserten Filter und ein Verfahren wie vorbeschrieben bereitzustellen, der die Unzulänglichkeiten von Phosphatbindern überwindet und einen Filter liefert, der leicht anzugiessen und anzuwenden ist und verbesserte thermische Eigenschaften aufweist.

Erfindungsgemäss wurde das dadurch erreicht, dass der keramische Schaumfilter einen Gehalt von mindestens 50 Gew.-% Siliciumcarbid und mindestens 3 Gew.-% Siliciumdioxid als Glühprodukt, aus einem im Schlicker enthaltenen kolloidalen Siliciumdioxid-Binder, aufweist.

Die vorliegende Erfindung führt zu einem verbesserten keramischen Schaumfilter und vermittelt ein Verfahren, um denselben herzustellen. Der Filter zeigt ausgezeichnete physikalische Eigenschaften, speziell eine hohe Wärmeleitfähigkeit,und ermöglicht ein schnelles Angiessen und Benetzen durch Eisen und Legierungen auf Eisenbasis. Die Unzulänglichkeiten der Phosphatbinder, speziell deren thermischchemische Instabilität, resultierend aus der Phosphataufnahme durch das geschmolzene Metall, werden damit eliminiert.

Der verbesserte keramische Schaumfilter nach vörliegender Erfindung wird derart hergestellt, dass ein retikulierter organischer Polymerschaum mit einem wässrigen Schlicker einer thixotropen Zusammensetzung, enthaltend Siliciumcarbid, imprägniert und der überschüssige Schlicker entfernt wird und dem anschliessenden Trocknen und Aufheizen des behandelten Polymerschaumes, um die organischen Komponenten daraus zu entfernen und durch Brennen bei erhöhten Temperaturen, um den keramischen Schaumfilter zu bilden. Nach der Erfindung wird der Polymerschaum mit einem Schlicker, enthaltend einen kolloidalen Siliciumdioxid-Binder, imprägniert, und im Schlicker sind mindestens 50 Gew.-% Siliciumcarbid und mindestens 3 Gew.-%

Siliciumdioxid, bezogen auf die Feststoffe, enthalten. Vorzugsweise beträgt der Gehalt an Siliciumdioxid, bezogen auf die Feststoffe, 3 - 15 Gew.-%.

Das Verfahren und der Filter vorliegender Erfindung weisen signifikante Vorteile auf, besonders in bezug auf die Filtration von Eisen und von Legierungen auf Eisenbasis. Es wurde gefunden, dass das kolloidale Siliciumdioxid einen benetzenden Einfluss auf das Endprodukt in bezug auf Eisen und Legierungen auf Eisenbasis hat und deshalb ein schnelles Angiessen bei der Filtration von Eisen oder Legierungen auf Eisenbasis bewirkt. Dies stellt einen bedeutenden Fortschritt gegenüber dem Stande der Technik dar.

Weiters ist vorliegende Erfindung nicht durch die Unzulänglichkeiten der bekannten Phosphatbinder charakterisiert. Die Anwendung von Phosphatbindern fügt der Schmelze durch die leichte Löslichkeit der Phosphatverbindungen bei der Filtration von Eisen und Legierungen auf Eisenbasis unerwünschte Verunreinigungen zu. Dagegen ist das Siliciumdioxid aus dem kolloidalen Siliciumdioxid-Binder nach vorliegender Erfindung nicht leicht in Eisen und in den Legierungen auf Eisenbasis löslich. Ferner sind Schmelzen von Eisen und von Legierungen auf Eisenbasis gegenüber Silicium toleranter als gegenüber Phosphaten. Dies ist ein besonderer Fortschritt, wenn Metall aus dem gebrauchten Filter durch plazieren des gebrauchten Filters in der Schmelze, welches ein in der Praxis übliches Verfahren darstellt, zurückgewonnen wird. Weiters ist der Filter nach vorliegender Erfindung ökonomisch und hat ausgezeichnete physikalische Eigenschaften, insbesondere eine hohe thermische Leitfähigkeit, welche eine gute Wärmeschockbeständigkeit gibt und ein thermisch-mechanisches Versagen des Filters verhindert.

Weitere Eigenheiten vorliegender Erfindung werden nachstehend beschrieben.

In Uebereinstimmung mit vorliegender Erfindung wird der keramische Schaumfilter aus einem offenzelligen, vorzugsweise hydrophoben, flexiblen Schaummaterial enthaltend eine Vielzahl von untereinander verbundenen Durchgängen, umgeben durch ein Netzwerk aus diesem flexiblen Schaummaterial, hergestellt. Typische Materialien, welche angewendet werden können, umfassen polymerische Schäume wie der bevorzugte Polyurethanschaum und cellulosische Schäume. Generell können irgendwelche brennbaren, organischen Kunststoffschäume verwendet werden, die eine Rückformkraft und die Fähigkeit zur ursprünglichen Form zurückzukommen, aufweisen. Der Schaum muss unter der Brenntemperatur des angewendeten keramischen Materials ausbrennen oder verdampfen können.

Der wässerige keramische Schlicker, welcher angewendet wird, sollte thixotrop sein, einen relativ hohen Grad an Fliessfähigkeit aufweisen und eine Suspension des gewünschten keramischen Materials enthalten.

Die Siliciumcarbid-Komponente hat vorzugsweise eine Korngrösse von kleiner gleich 325 mesh oder weniger als 45 µm, wobei man aber ohne weiteres ein Siliciumcarbid mit einer Korngrösse von kleiner gleich 100 mesh oder weniger als 150 µm anwenden kann. Die Möglichkeit, feinkörniges keramisches Material wie Prozessfeinheiten von 10 µm und weniger anwenden zu können, stellt einen signifikanten Fortschritt, besonders im Hinblick auf Kostenerwägungen, dar. Der Gehalt an Feststoffen in der keramischen Zusammensetzung muss wenigstens 50 % Siliciumcarbid mit einem Maximum von 97 % Siliciumcarbid sein.

Man kann ohne weiteres zusätzliche keramische Materialien in Kombination mit dem Siliciumcarbid verwenden. Aluminiumoxid ist ein besonders bevorzugtes Additiv und wenn dieses angewendet, sollte es mit einer Korngrösse von kleiner gleich 325 mesh oder weniger als 45 µm eingesetzt werden. Selbstverständlich können andere keramische Materialien wie Zirkonoxid, Zirkonsand, Chromoxid, Cordierit, Mullit etc. ohne weiteres angewendet werden.

Es ist ein Fortschritt, dass die Anwendung eines störenden Phosphatbinders in Uebereinstimmung mit vorliegender Erfindung unterbleiben kann. Durch das Weglassen der störenden Phosphatkomponente im Filter wird die Tendenz, dass sich unerwünschte Verunreinigungen zu Eisen- und auf Eisen basierenden Legierungen zu addieren, vermieden. Der Binder vorliegender Erfindung ist ein kolloidaler Siliciumdioxid-Binder, welcher in Form einer wässrigen Dispersion von Teilchen in 10 bis 50 % Wasser angewendet werden kann. Die kolloidale Dispersion ist eine stabile, nicht absitzende Suspension mit einer Partikelgrösse von 1 µm oder weniger. Die kolloidale Siliciumdioxidkomponente stellt den Binder dar, und auf Grund der kolloidalen Natur der Dispersion wohnt ihr die erwünschte Thixotropie inne.

Selbstverständlich können andere Additive angewendet werden, entweder als zusätzlicher Binder oder aus anderen erwünschten Gründen. Vorzugsweise kann man zum Beispiel ohne weiteres Montmorillonit, Aquathix (Markenname der "Tenneco Chemicals" für ein wasserlösliches Polysaccharid), Bentonit, Kaolin und dergleichen verwenden.

In Uebereinstimmung mit dem Verfahren vorliegender Erfindung stellt man einen retikulierten organischen Poymerschaum bereit und imprägniert den Schaum mit dem wässrigen Schlicker. Ausführliche Verfahren, den keramischen Schaum für Filter für geschmolzenes Metall herzustellen, sind in den US Patenten 3,962,081, 4,075,303 und 4,024,212 beschrieben, auf deren Lehre hiermit Bezug genommen wird.

Das flexible Schaumstoffmaterial wird mit dem wässrigen keramischen Schlicker imprägniert, so dass das faserähnliche Netzwerk oder die Filamente damit beschichtet sind und auch die Durchgänge damit gefüllt sind.

Normalerweise wird das einfache Eintauchen des Schaumes in den Schlicker für einen kurzen Zeitintervall, der ausreicht, um eine nahezu vollständige Sättigung des Schaumes zu gewährleisten, bevor° zugt. Die Porengrösse des polymerischen Materials kann praktischerweise 1,2 Poren je laufenden cm oder grösser sein. Die Porengrösse im Bereich von 1,2 - 10 Poren je laufenden cm wurde als besonders vorteilhaft für die Filtration von Eisen und Legierungen auf Eisenbasis, im Hinblick auf den höheren totalen Materialdurchsatz, befunden, obwohl man auch ohne weiteres kleinere Porengrössen, beispielsweise bis zu 20 Poren je cm, verwenden kann.

Der imprägnierte Schaum wird dann zusammengedrückt, um einen Teil des Schlickers auszupressen und das faserförmige Netzwerk oder die Filamente mit dem restlichen Schlicker beschichtet zu belassen und auch eine Anzahl von blockierten Poren durch den Körper hindurch zu erzeugen, um die Gewundenheit der Fliesswege zu erhöhen und um lange gerade Durchlässe zu vermeiden, wobei die blockierten Poren homogen durch den keramischen Körper verteilt sein müssen und nicht in Gruppen zusammenliegen dürfen.

Für diejenigen Fälle, in welchen maximale Durchsätze mit einem geringeren Filtrationsgrad wünschenswert sind, wird eine relativ weite Porengrösse mit sehr wenigen blockierten Poren bevorzugt. In einem kontinuierlichen Verfahren beispielsweise, kann man den imprägnierten Schaum durch voreingestellte Walzen passieren lassen, um das gewünschte Austreiben des Schlickers aus dem Schaum zu erreichen und die gewünschte Restmenge darin zu belassen. Selbstverständlich kann dieses Austreiben auch von Hand geschehen durch einfaches ausquetschen des flexiblen Schaummaterials bis zum gewünschten Mass. Zu diesem Zeitpunkt ist der Schaum immer noch flexibel und kann, falls gewünscht, in Formen entsprechend den Filterzielen, z.B. in gebogene Platten, hohle Zylinder etc., geformt werden. Es ist notwendig, dem geformten Schaum auf übliche Weise in der geformten Stellung zu halten, bis das organische Material im Rahmen der nachfolgenden Prozesse zersetzt ist. Der imprägnierte Schaum wird dann durch eine an sich bekannte Vorrichtung getrocknet, beispielsweise durch Lufttrocknung, durch beschleunigte Trocknung bei einer Temperatur von 100 bis 700°C für 15 Min. bis 6 Std. oder durch Mikrowellentrocknung. Eine Lufttrocknung kann in 8 bis 24 Std. erreicht werden. Nach dem Trocknen wird das Material bei erhöhter Temperatur von über 1093°C gebrannt, um den keramischen Schaumfilter zu bilden, wobei Temperaturen bis zu 1371°C angewendet werden können. Nach dem Brennen ist das resultierende Produkt gekennzeichnet durch eine Anzahl von gleichmässig verteilten, blockierten Poren, wie oben beschrieben. Die Brennzeit auf oder nahe der Spitzentemperatur beträgt wenigstens 15 Min. und dauert generell mindestens 1 Std. und weniger als 10 Std.. Die totale Brennzeit, umfassend aufheizen zur Spitzentemperatur und abkühlen lassen, kann selbstverständlich in weitem Masse variieren, jeweils abhängig vom verwendeten Ofentyp.

Das resultierende Produkt hat die beschriebenen Eigenschaften und weist die genannten Fortschritte auf.

Selbstverständlich können zusätzliche anorganische Zusätze, wie zum Beispiel Sinterhilfen, Kornwachstumsinhibitoren oder anorganische rheologische Hilfsmittel, ohne weiteres angewendet werden, um besonders bevorzugte Eigenschaften zu erhalten. Andere organische Additive können ebenso vorteilhaft verwendet werden, zum Beispiel temporäre Binder und rheologische Hilfsmittel.

### BEISPIEL 1

Ein thixotroper keramischer Schlicker wurde nach folgender Angabe hergestellt:

| | | |
|---|---|---|
| 35,71 kg | Siliciumcarbid (ungefähr 50,94 %) | |
| 4,37 kg | Wasser (ungefähr 6,23 %) | |
| 13,10 kg | Aluminiumoxid (ungefähr 18,68 %) | |
| 16,20 kg | kolloidales Silicumdioxid in wässriger Suspension (ungefähr 23,11 %) | |
| 0,67 kg | Montmorillonit (ungefähr 0,96 %) | |
| 0,05 kg | Aquathix (ungefähr 0,08 %) | |

Die genannte Zusammensetzung weist einen Gehalt an Feststoffen wie nachfolgend auf:

| | | | |
|---|---|---|---|
| Siliciumcarbid | - Feststoffe | 35,75 kg | - 65,65 % |
| Aluminiumoxid | - Feststoffe | 13,10 kg | - 24,08 % |
| kolloidales Siliciumdioxid | - Feststoffe | 4,86 kg | - 8,94 % |
| Montmorillonit | - Feststoffe | 0,67 kg | - 1,23 % |
| Aquathix | - Feststoffe | 0,05 kg | - 0,10 % |

EP 0 305 455 B1

Der vorstehend beschriebene thixotrope Schlicker wurde zum Imprägnieren eines nominal 4 Poren je laufenden cm aufweisenden, offenzelligen, flexiblen Polyurethanschaumes mit einer Grössen von 7,62 x 7,62 cm$^2$ gebraucht, derart, dass das faserähnliche Netzwerk damit beschichtet war und die Durchgänge damit gefüllt waren. Die Imprägnation wurde durch Eintauchen der Schaummuster in den Schlicker vervollständigt, und durch Anwendung von voreingestellten walzen wurde der Schaum zusammengedrückt und ein Teil des Schlikkers ausgepresst, während das faserähnliche Netzwerk mit dem restlichen Schlicker beschichtet blieb und eine Anzahl von blockierten Poren durch den Körper hindurch gleichmässig verteilt, gebildet wurden und sich damit die Gewundenheit der Fliesswege erhöhte.

Die resultierenden, imprägnierten Schäume wurden getrocknet und aufgeheizt, um die organische Komponente daraus zu entfernen und bei 1149°C während 1 Std. gebrannt. Die resultierenden keramischen Schaummuster waren gekennzeichnet durch eine offenzellige Struktur mit einer Vielzahl von untereinander verbundenen Durchlässen, umgeben von einem Netzwerk aus Keramik.

BEISPIEL 2

Die keramischen Schaumfilter, hergestellt nach Beispiel 1, wurden für die Filtration von duktilem Eisen durch Plazieren der Muster im Einguss-System einer Giessvorrichtung angewendet. Die Muster waren 7,62 x 7,62 cm$^2$ gross, und verschiedene Versuche wurden in jedem Falle mit 67,95 kg duktilem Eisen je Durchlauf ausgeführt. Die Temperatur der Legierung in den Versuchen lag zwischen 1427°C - 1482°C. In allen Versuchen waren die Giesszeiten weniger als 20 Sekunden, alle Filter benetzten schnell mit keiner offensichtlichen Reduktion in der Durchflussrate, und die resultierenden Gussprodukte waren im wesentlichen frei von sichtbaren Fehlern, besonders auch verglichen mit unfiltrierten Giessprodukten.

**Patentansprüche**

1. Keramischer Schaumfilter zur Filtration von geschmolzenen Metallen, mit einer offenzelligen Struktur mit einer Vielzahl von untereinander verbundenen Durchgängen, die mit einem Netzwerk aus Keramik umgeben sind, wobei die Keramik aus einem Siliciumcarbid enthaltenden Schlicker gebildet wurde,
dadurch gekenntzeichnet, dass
der keramische Schaumfilter einen Gehalt von mindestens 50 Gew.-% Siliciumcarbid und mindestens 3 Gew.-% Siliciumdioxid als Glühprodukt aus einem im Schlicker enthaltenen kolloidalen Siliciumdioxid-Binder aufweist.

2. Filter nach Anspruch 1, worin die keramische Schaumstruktur 3 - 15 Gew.-% Siliciumdioxid enthält.

3. Filter nach Anspruch 1 und 2, enthaltend Aluminiumoxid.

4. Verfahren zur Herstellung eines keramischen Schaumfilters für die Filtration von geschmolzenen Metallen nach den Ansprüchen 1-3, wobei ein retikulierter organischer Polymerschaum mit einem wässrigen Schlikker einer thixotropen keramischen Zusammensetzung, enthaltend Siliciumcarbid,imprägniert und der überschüssige Schlicker entfernt wird und anschliessendem Trocknen und Aufheizen des behandelten Polymerschaumes, um die organischen Komponente daraus zu entfernen und Brennen bei erhöhten Temperaturen, um den keramischen Schaumfilter zu bilden, dadurch gekennzeichnet, dass der Polymerschaum mit einem Schlicker, enthaltend einen kolloidalen Siliciumdioxid-Binder, imprägniert wird und im Schlicker mindestens 50 Gew.-% Siliciumcarbid und mindestens 3 Gew.-% Siliciumdioxid, bezogen auf die Feststoffe, enthalten sind.

5. Verfahren nach Anspruch 4, dadurch gekennzeichnet, dass der Gehalt an Siliciumdioxid, bezogen auf die Feststoffen, 3 - 15 % beträgt.

6. Verfahren nach Anspruch 4 und 5, dadurch gekennzeichnet, dass das Siliciumcarbid eine Korngrösse von 100 mesh oder kleiner aufweist.

7. Verfahren nach Anspruch 4 bis 6, dadurch gekennzeichnet, dass die keramische Zusammensetzung Aluminiumoxid enthält.

8. Verfahren nach Anspruch 4 bis 7, dadurch gekennzeichnet, dass das Aluminiumoxid eine Korngrösse von 325 mesh oder kleiner aufweist.

5

**9.** Verfahren nach Anspruch 4 bis 8, dadurch gekennzeichnet, dass der Schlicker 10 - 50 % Wasser enthält.

**10.** Verfahren nach Anspruch 4 bis 9, dadurch gekennzeichnet, dass das Aufheizen bei einer Temperatur bis zu 677°C erfolgt.

**11.** Verfahren nach Anspruch 4 bis 10, dadurch gekennzeichnet, dass der Polymerschaum eine Porenzahl von wenigstens 1,2 Poren je laufenden cm aufweist.

## Claims

**1.** Ceramic foam filter for filtering molten metals and having an open-cell structure with a number of passages connected to one another which are surrounded by a network of ceramic, wherein the ceramic has been formed from a slip containing silicon carbide,
    characterised in
that the ceramic foam filter contains at least 50 wt.% of silicon carbide and at least 3 wt.% of silicon dioxide as an annealed product from a colloidal silicon dioxide binder contained in the slip.

**2.** Filter according to claim 1, wherein the ceramic foam structure contains 3 - 15 wt.% of silicon dioxide.

**3.** Filter according to claim 1 and 2, containing aluminium oxide.

**4.** Process for producing a ceramic foam filter for filtering molten metals according to claims 1-3, wherein a reticulated, organic polymer foam is impregnated with an aqueous slip of a thixotropic ceramic composition containing silicon carbide, and the excess slip is removed, with subsequent drying and heating of the treated polymer foam to remove the organic components therefrom and firing at elevated temperatures to form the ceramic foam filter, characterised in that the polymer foam is impregnated with a slip containing a colloidal silicon dioxide binder, and the slip contains at least 50 wt.% of silicon carbide and at least 3 wt.% of silicon dioxide based on the solids.

**5.** Process according to claim 4, characterised in that the silicon dioxide content is 3 - 15 % based on the solids.

**6.** Process according to claim 4 and 5, characterised in that the silicon carbide has a grain size 100 mesh or less.

**7.** Process according to claim 4 to 6, characterised in that the ceramic composition contains aluminium oxide.

**8.** Process according to claim 4 to 7, characterised in that the aluminium oxide has a grain size 325 mesh or less.

**9.** Process according to claim 4 to 8, characterised in that the slip contains 10 - 50 % of water.

**10.** Process according to claim 4 to 9, characterised in that heating is carried out at a temperature up to 677°C.

**11.** Process according to claim 4 to 10, characterised in that the polymer foam has a pore number of at least 1.2 pores per continuous cm.

## Revendications

**1.** Filtre en mousse céramique pour la filtration des métaux fondus, présentant une structure à cellules ouvertes avec une multiplicité de passages reliés entre eux qui sont entourés par une réseau de céramique, la céramique ayant été formée à partir d'une suspension contenant du carbure de silicium,
    caractérisé en
ce que le filtre en mousse céramique a une teneur d'au moins 50 % en poids de carbure de silicium et d'au moins 3 % en poids de dioxyde de silicium sous forme de produit de calcination provenant d'un liant de dioxyde de silicum colloïdal contenu dans la suspension.

**2.** Filtre selon la revendication 1, dans lequel la structure de mousse céramique contient 3 à 15 % en poids de dioxyde de silicium.

3. Filtre selon les revendications 1 et 2 contenant de l'oxyde d'aluminium.

4. Procédé de fabrication d'un filtre en mousse céramique pour la filtration de métaux fondus selon les revendications 1 à 3, dans lequel une mousse polymérique organique réticulée est imprégnée par une suspension aqueuse d'une composition céramique thixotrope contenant du carbure de silicium, et la suspension en excès est éliminée puis la mousse polymérique traitée est séchée et chauffée pour en éliminer les composants organiques et calcinée à température élevée pour former le filtre' en mousse céramique, caractérisé en ce que la mousse polymérique est imprégnée par une suspension contenant un liant de dioxyde de silicium colloïdal, et la suspension contient au moins 50 % en poids de carbure de silicium et au moins 3 % en poids de dioxyde de silicium par rapport aux matières solides.

5. Procédé selon la revendication 4, caractérisé en ce que la teneur en dioxyde de silicium, rapportée aux matières solides, est de 3 à 15 %.

6. Procédé selon les revendications 4 et 5, caractérisé en ce que le carbure de silicium présente une taille de grains de 100 mesh ou inférieure.

7. Procédé selon les revendications 4 à 6, caractérisé en ce que la composition céramique contient de l'oxyde d'aluminium.

8. Procédé selon les revendication 4 à 7, caractérisé en ce que l'oxyde d'aluminium présente une taille de grains de 325 mesh ou inférieure.

9. Procédé selon les revendications 4 à 8, caractérisé en ce que la suspension contient 10 à 50 % d'eau.

10. Procédé selon les revendications 4 à 9, caractérisé en ce que le chauffage a lieu à une température atteignant 677°C.

11. Procédé selon les revendications 4 à 10, caractérisé en ce que la mousse polymérique présente un nombre de pores d'au moins 1,2 pore par cm courant.